# EUROPEAN PATENT APPLICATION

(11) **EP 4 468 654 A1**
(43) Date of publication of application: **27.11.2024**
(21) Application number: 23174836.9
(22) Date of filing: 23.05.2023
(51) Int. Cl.: H04L 9/40, H04L 9/00, H04L 61/4511

(54) **METHOD AND SYSTEM FOR OPERATING A DOMAIN NAME SYSTEM USING A BLOCKCHAIN**

(71) Applicant: avodaq AG, 80687 Munich (DE)
(72) Inventor: PLATZER, Matthias, 81247 München (DE); KUSCH, Patrick, 22043 Hamburg (DE); BONK, Sebastian, 10711 Berlin (DE)
(74) Representative: Patentanwaltskanzlei WILHELM & BECK

(57) **Abstract**

A computer-implemented method for operating a domain name system by using a blockchain, wherein the blockchain comprises a smart contract, wherein the smart contract handles at least one domain non-fungible-token (DN NFT), wherein the DN NFT comprises a domain name and an IP address that is assigned to the domain name, wherein the smart contract searches after receiving a request with a domain name to resolve an IP address for the domain name by using the domain name the DN NFT that comprises the domain name and the IP address, wherein the smart contract outputs the IP address that is assigned to the domain name in the DN NFT.

## Description

The invention refers to a method for operating a domain name system and a system for operating a domain name system using a blockchain.

US 11,558,344 B1 describes a method and a system for operating a domain name system, wherein an identifier of a non-fungible token is sent to a blockchain to search for a non-fungible token to identify an IP address for a domain name.

The object of the proposed method and system is to provide a simpler and more flexible method to use a blockchain for a domain name system.

The object is solved by the independent claims. The dependent claims describe further embodiments of the invention.

A computer-implemented method for operating a domain name system by using a blockchain is proposed, wherein the blockchain comprises a smart contract, wherein the smart contract handles at least one domain non-fungible-token (DN NFT), wherein the DN NFT comprises a domain name and an IP address that is assigned to the domain name, wherein the smart contract searches after receiving a request to resolve an IP address for a given domain name the DN NFT that comprises the domain name and the IP address that is assigned to the domain name, wherein the smart contract outputs the IP address that is assigned to the domain name in the DN NFT.

The use of the domain name for searching the DN NFT simplifies the search. It is not necessary to search outside the blockchain an identifier for a DN NFT for example. Therefore, the search from a user can be directly sent to the blockchain to search for the domain name the corresponding IP address. This method can be directly integrated in existing systems since the search process is not changed. The request can be sent directly to the blockchain.

In a further embodiment a domain list that assigns domain names to DN NFTs is stored in the blockchain, wherein each DN NFT comprises a domain name and the corresponding IP address, wherein the smart contract is embodied to access the list, to search a searched domain name in the list, to access the DN NFT that is assigned to the searched domain name of the list, to output the IP address that is stored in the DN NFT as IP address of the searched domain name. The use of the list is an advantageous solution to find for a domain name the corresponding DN NFT. The DN NFT can be displayed with its blockchain address in the domain list.

In a further embodiment the smart contract is embodied to receive a request to mint a DN NFT for a domain name and an IP address, wherein the smart contract is embodied to mint a DN NFT in the blockchain that comprises the domain name and the IP address.

In a further embodiment the smart contract lists the minted DN NFT in the domain list with the domain name and an identifier or an address of the minted DN NFT.

In a further embodiment the DN NFT comprises an address of a wallet, wherein the smart contract is embodied to change data of the DN NFT upon a request from the wallet with the address that is stored in the DN NFT. This method allows handling the DN NFT by wallets.

In a further embodiment the smart contract is embodied to provide upon a request at least one DN NFT that can be bought and transferred to another wallet, and wherein especially the smart contract changes the address of the wallet in the DN NFT after a predetermined amount of token is transferred to a predetermined wallet. Therefore, DN NFTs can be handled as usual NFTs in the blockchain.

In a further embodiment the smart contract is embodied to mint a DN NFT for a top level domain with a predetermined IP address.

In a further embodiment, the smart contract is embodied to mint a DN NFT for a subdomain of a top level domain.

A blockchain for operating a domain name system is provided, wherein the blockchain comprises a smart contract, wherein the smart contract handles at least one domain non-fungible-token (DN NFT), wherein the DN NFT comprises a domain name and an IP address that is assigned to the domain name, wherein a request with a domain name is received by the blockchain to resolve for the domain name a corresponding IP address of the domain name, wherein the smart contract of the blockchain searches by using the domain name the DN NFT in the blockchain that is assigned to the domain name, wherein the smart contract reads out the IP address of the DN NFT, wherein the blockchain puts out as a response to the request at least the IP address that is assigned to the domain name in the DN NFT of the blockchain.

In an embodiment, a request to mint for a domain name and for an IP address a domain non-fungible-token (DN NFT) is received by the blockchain, wherein a smart contract of the blockchain mints the DN NFT that comprises the domain name and the IP address in the blockchain.

In a further embodiment the smart contract lists the minted DN NFT in a domain list with the domain name and a blockchain address of the DN NFT.

A computer-implemented method for operating a domain name system is provided, wherein a request with a domain name is sent to a blockchain with the request to search a domain non-fungible-token (DN NFT) that comprises the domain name and the IP address in the blockchain and to put out the IP address of the DN NFT.

A computer-implemented method for operating a domain name system is provided, wherein a request for a domain name and an IP address is sent to a blockchain with the request to mint a domain non-fungible-token (DN NFT) that comprises the domain name and the IP address in the blockchain.

In an embodiment the request with the domain name is sent to the blockchain to resolve for the domain name the corresponding IP address of the domain name via port 53 of an UDP protocol or TCP protocol.

In an embodiment, the request with the domain name is checked before sending the request to the blockchain, wherein the request is checked whether it comprises a domain name that is stored in the blockchain or outside the blockchain, wherein the request is sent to the blockchain if the request comprises a domain name that is stored in the blockchain, and wherein the request is sent to a domain name system outside the blockchain if the request comprises a domain name that is stored outside the blockchain. This method allows to combine a domain name system that is operated by a blockchain and a domain name system that is operated outside the blockchain.

A computer is provided that is embodied to perform any one of the proposed methods.

A computer program product is provided with instructions for performing any one of the proposed methods claims.

The IP address of the domain name may be any kind of IP address.

The above-described features, characteristics and advantages of the present invention, and the manner in which they are achieved, will become clearer and more readily understood in the context of the following description of the embodiments, which will be explained in more detail in conjunction with the drawings, wherein
figure 1 shows a schematic view of a computer that is connected with a blockchain network,
figure 2 shows a process for deploying a smart contract for a top level domain on the blockchain,
figure 3 shows a process for minting an NFT with a domain name in the blockchain,
figure 4 shows a process for creating a subdomain in the blockchain,
figure 5 shows a process for setting an IPv4 address for a subdomain in the blockchain,
figure 6 shows a process for setting an IPv6 address for a subdomain in the blockchain,
figure 7 shows a process for setting an IPv4 address for a domain in the blockchain,
figure 8 shows a process for listing a domain for sale on a marketplace in the blockchain,

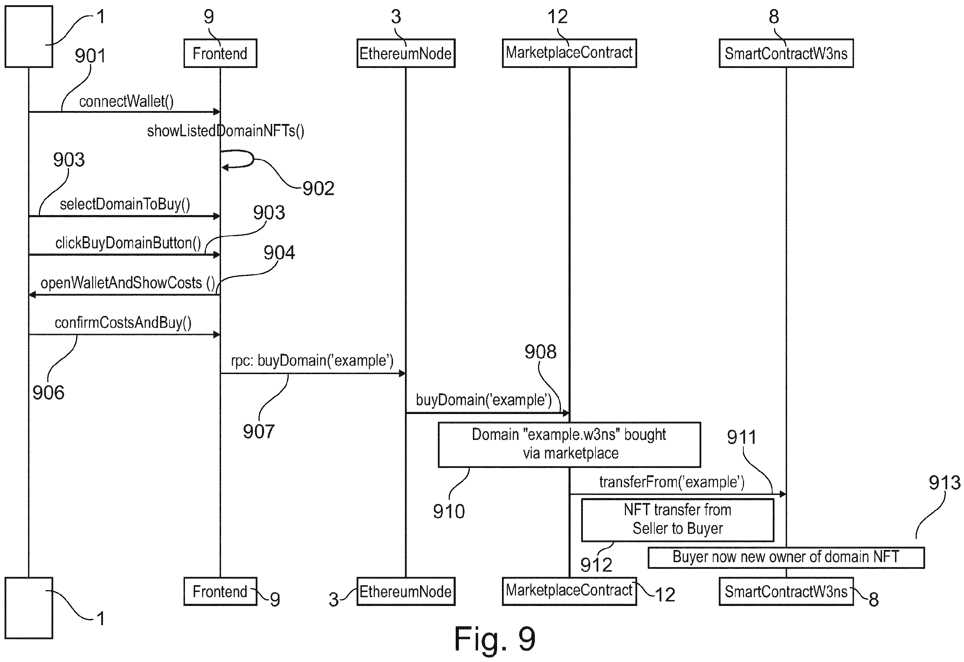

figure 9 shows a process for purchasing a domain on a marketplace in the blockchain, and
figure 10 shows a process for resolving a domain name in the blockchain.,

### 1.1 Blockchain

Blockchain is a digital ledger that securely records and verifies transactions or information across multiple computers. It allows people to create and store information in a transparent and tamper-resistant way, making it ideal for applications like secure financial transactions, supply chain management, and even voting systems. Think of it as a shared and unchangeable record book that everyone can access and trust, eliminating the need for intermediaries and enhancing security and transparency.

The proposed method and system may be used for any kind of blockchain. In this embodiment as an example Ethereum blockchain is used for explaining the proposed method and system. The Ethereum blockchain may fulfil for example the Ethereum standards, for example ERC 20, ERC 721 and/or ERC 1155. The proposed DN NFTs, and the proposed smart contracts, the proposed wallet and the proposed methods may fulfil the corresponding Ethereum standards. Specific functions as for example authentication of a wallet by accessing the blockchain are not described but performed as usual in blockchain application and/or in Ethereum blockchain application.

### Ethereum

Ethereum is a decentralized blockchain platform that goes beyond just recording transactions. It enables the creation and execution of smart contracts, which are self-executing agreements with predefined rules. These contracts can automatically trigger actions and transactions based on certain conditions, removing the need for intermediaries. Ethereum also has its own cryptocurrency called Ether (ETH), which fuels the platform and incentivizes participants. In simpler terms, Ethereum expands on the capabilities of blockchain by allowing developers to build decentralized applications (DApps) that can automate processes and interactions in a secure and transparent manner.

### 1.1.2 Ethereum Node

An Ethereum node, for example a network computer 3, 4, 5, 6, is a participant in the Ethereum network that helps maintain the integrity of the blockchain. It is essentially a computer or device running software that allows it to communicate and interact with other nodes on the network.

Nodes play a role in the Ethereum ecosystem by validating transactions, storing a copy of the blockchain, and participating in the consensus process to ensure the network reaches agreement on the state of the blockchain. They also execute smart contracts and propagate information across the network.

Running an Ethereum node allows users to access the Ethereum network directly, without relying on third-party services. It enables users to verify transactions, monitor the network, and interact with decentralized applications. Nodes contribute to the security and decentralization of the Ethereum network by adding redundancy and resilience, as well as helping to enforce the consensus rules of the network.

In summary, an Ethereum node is a key component of the Ethereum network, responsible for maintaining the blockchain, validating transactions, executing smart contracts, and contributing to the decentralized nature of the platform.

### 1.1.3 Remote Procedure Calls (RPC)

A Remote Procedure Call (RPC) is a mechanism that allows a program or application to request and execute procedures or functions on a remote computer or node. In the context of an Ethereum node, it refers to the ability to interact with the node and its functionalities remotely.

An Ethereum node typically exposes an RPC interface that enables external programs or applications to communicate with it over a network connection. This RPC interface provides a set of methods or functions that can be called to perform various operations on the Ethereum blockchain.

Using the RPC interface of an Ethereum node, developers and users can send requests to retrieve information, submit transactions, execute smart contracts, and access other blockchain-related functionalities. It allows them to interact with the Ethereum network without needing to run their own local node or directly manage the complexities of the underlying blockchain protocols.

For example, an application could use the RPC interface of an Ethereum node to query the balance of an Ethereum address, retrieve transaction details, or deploy and interact with smart contracts. By making RPC calls to the node, the application can seamlessly access and utilize the features and data available on the Ethereum network.

In summary, an RPC interface on an Ethereum node enables remote programs or applications to communicate with and utilize the functionalities of the node, such as retrieving blockchain data, executing transactions, and interacting with smart contracts. It provides a convenient way to interact with the Ethereum network without the need for direct blockchain management.

### 1.1.4 TestNet

A TestNet is an optional separate network environment created to test and experiment with blockchain platforms like Ethereum. It serves as a sandbox for developers, allowing them to deploy and test their smart contracts, applications, and network configurations without using real or valuable assets.

In the case of Ethereum, there are several TestNets available, such as Goerli, Ropsten, Kovan, and Rinkeby. These TestNets simulate the functionality of the main Ethereum network but operate with test versions of Ether and have their own distinct network identifiers. They are designed to facilitate development, debugging, and the exploration of new features or upgrades before deploying them to the live Ethereum network.

TestNets like Goerli, Ropsten, Sepolia, and Kovan provide developers with a decentralized testing environment that closely resembles the Ethereum network. They allow for the deployment and interaction with smart contracts, the testing of transaction flows, and the simulation of real-world scenarios. These TestNets are for ensuring the stability, security, and compatibility of applications and protocols before they are deployed on the main Ethereum network.

In summary, a TestNet is a dedicated network environment that developers use to experiment, test, and refine their applications and smart contracts without affecting the real Ethereum network. TestNets like Goerli, Ropsten, Sepolia, and Kovan provide a safe space for developers to iterate and ensure the reliability of their Ethereum-based projects.

For this project, we use the Sepolia TestNet only. All the contracts will be deployed there.

### 1.1.5 Hardhat

Hardhat is an optional versatile development tool and task runner for Ethereum smart contract development. It simplifies the process of compiling, deploying, testing, and debugging smart contracts. With its comprehensive features and extensibility through plugins, Hardhat enhances the development workflow and ensures the reliability and correctness of smart contracts. It supports multiple Ethereum networks, provides a testing framework, and offers advanced debugging and logging capabilities. Overall, Hardhat is a popular choice among Ethereum developers for its efficiency and flexibility in smart contract development.

### 1.1.6 Wallet

A wallet, in the context of blockchain and cryptocurrencies like Ethereum, is a digital tool or application that allows users to securely store, manage, and interact with their digital assets. It serves as a personal interface to access and control ownership of cryptocurrencies.

A wallet typically consists of two main components: a public address and a private key. The public address is a unique identifier that represents the user's wallet and can be shared with others for receiving funds. The private key, on the other hand, is a secret cryptographic code that grants ownership and control over the associated funds.

Wallets can come in various forms, such as software applications, hardware devices, or even paper-based solutions. They provide functionalities like generating new addresses, sending and receiving transactions, and managing balances.

When using a wallet, users can initiate transactions by signing them with their private key, proving their ownership of the funds. Wallets also store a transaction history, allowing users to keep track of their activity.

Additionally, wallets can interact with decentralized applications (DApps) built on the blockchain. Users can authenticate and authorize transactions within DApps using their wallet, ensuring secure and transparent interactions.

Overall, a wallet is a digital tool that enables users to store, manage, and transact with their cryptocurrencies for example DN NFT or NFT securely. It provides a user-friendly interface for accessing and controlling digital assets while maintaining the confidentiality of private keys. The wallet may fulfil the respective Ethereum standards.

### 1.2 Smart Contract

A smart contract is a self-executing computer program that automatically enforces and executes predefined agreements or conditions on a blockchain, especially the Ethereum blockchain. It operates on the principles of blockchain technology, such as transparency, immutability, and decentralization.

Unlike traditional contracts, which rely on intermediaries or legal systems to enforce terms, smart contracts eliminate the need for intermediaries by automating the execution and enforcement of agreements. They are written in code and stored on the blockchain, making them tamper-resistant and transparent to all participants.

Smart contracts are capable of defining rules, conditions, and actions that are triggered based on predefined events or inputs. Once the conditions are met, the contract executes the specified actions autonomously and transparently, without any possibility of censorship or interference.

For example, on the Ethereum blockchain, developers can create smart contracts using programming languages like Solidity. These contracts can represent a wide range of agreements, such as financial transactions, supply chain processes, voting systems, or even decentralized applications (DApps).

Smart contracts enable trust and security by removing the need to rely on centralized authorities or intermediaries. They ensure that all participants follow the agreed-upon rules and automate the process of transferring assets or executing actions, reducing costs, and eliminating potential disputes.

In summary, a smart contract is a self-executing program that automates the enforcement and execution of agreements on a blockchain. It eliminates the need for intermediaries, enhances transparency, and enables secure and decentralized interactions between parties.

### 1.2.1 NFT

Non-fungible tokens (NFTs) are unique digital assets that represent ownership or proof of authenticity of various items, including artworks, music, videos, virtual real estate, and even domain names. While NFTs have gained popularity in various industries, one notable application is the use of NFTs for transferable domain names.

Domain NFTs, also named domain tokens, leverage blockchain technology to create a decentralized and secure system for managing and trading domain names. Each domain NFT represents ownership and control of a specific domain and contains relevant information about the domain name, registration details, and additional metadata.

By using domain NFTs, individuals and businesses can directly own and control their domain names without relying on centralized authorities. The blockchain ensures transparency, immutability, and secure transfer of ownership, reducing the risk of fraud or disputes. Domain NFTs open up new possibilities for fractional ownership, leasing, and dynamic markets for digital real estate.

In summary, NFTs are unique digital assets that have revolutionized the ownership and trading of various digital items. Among their applications, domain NFTs provide a decentralized and transparent system for managing and transferring domain names securely, empowering individuals and businesses to directly own and control their digital domains. The NFT is stored in a block of the blockchain. The unique identifier may for example be a unique blockchain address within the used blockchain for Ethereum blockchain. An example for the NFT is a domain NFT that may comprise a domain name and an IP address and for example a unique identifier and/or a wallet address.

### 1.2.2 Deployment

In the context of smart contracts, a deployment refers to the process of deploying or creating an instance of a smart contract on a blockchain network.

When a smart contract is developed, it needs to be deployed onto a specific blockchain platform, such as Ethereum, for it to be operational and interactable. Deployment involves taking the compiled code of the smart contract and publishing it onto the blockchain, making it available for execution and interaction.

During the deployment process, a unique address is generated for the deployed smart contract on the blockchain. This address acts as an identifier and allows users and other contracts to interact with the deployed contract by calling its functions or sending transactions to it.

Once deployed, the smart contract becomes a part of the blockchain's state and is replicated across the network's nodes. It is stored in a tamper-resistant and transparent manner, ensuring that its code and data are immutable and accessible to all participants on the network.

Deploying a smart contract is a critical step that enables the contract to fulfill its intended purpose. It makes the contract's functionalities available to users, allowing them to interact with it, send transactions, and trigger the execution of its predefined logic.

In summary, the deployment of a smart contract refers to the process of publishing and creating an instance of the contract on a blockchain network. It involves generating a unique address for the contract, making it accessible for interaction, and establishing its presence on the blockchain for secure and transparent execution.

### 1.2.3 Minting

In the context of non-fungible tokens (NFTs), minting refers to the process of creating a new, unique instance of an NFT. It is the act of generating and assigning a specific token to represent a distinct digital asset on a blockchain.

When an NFT is minted, a smart contract is typically involved. The smart contract defines the characteristics, properties, and metadata of the NFT, such as its name, description, and associated content. Minting involves executing the smart contract's mint function, which creates a new token and assigns it a unique identifier. The NFT is stored in a block of the blockchain. The unique identifier may for example be a unique blockchain address within the used blockchain for Ethereum blockchain.

During the minting process, relevant information about the NFT, including its ownership and metadata, is stored on the blockchain. This ensures transparency, immutability, and verifiability of the NFT's creation and ownership history.

Minting is often performed by the creator or an authorized entity, and it establishes the initial ownership and authenticity of the digital asset represented by the NFT. Once minted, the NFT can be bought, sold, or transferred to other wallets or individuals.

Minting plays a role in enabling the creation and expansion of NFT-based ecosystems, empowering artists, creators, and collectors to tokenize and trade unique digital assets in a secure and transparent manner.

In summary, minting is the process of creating a new, unique instance of an NFT. It involves executing a smart contract's mint function, which assigns a specific identifier to represent a distinct digital asset on the blockchain. Minting establishes the initial ownership and authenticity of the NFT, facilitating its subsequent trading and transfer within NFT-based ecosystems. An example for the NFT is a domain NFT that may comprise a domain name and an IP address and for example a unique identifier and/or a wallet address.

### 1.2.4 Transfer

In the context of non-fungible tokens (NFTs), a transfer refers to the act of transferring ownership of an NFT from one wallet or address to another. It allows the NFT holder to move the token to a different wallet, effectively changing the possession and control of the digital asset on the blockchain.

The transfer process of an NFT involves interacting with the smart contract that governs the NFT's functionality. The smart contract includes a transfer function, which allows the current owner of the NFT to initiate the transfer by specifying the recipient's wallet address.

To initiate a transfer, the current owner of the NFT creates a transaction that includes the transfer function call along with the necessary parameters, such as the recipient's address and the specific NFT identifier or token ID. This transaction is then submitted to the blockchain network for processing.

Once the transaction is confirmed and added to a block of the blockchain, the ownership of the NFT is transferred to the designated recipient. The blockchain's decentralized and immutable nature ensures that the transfer is securely recorded and cannot be altered.

After the transfer is completed, the recipient becomes the new owner of the NFT and gains control over the associated digital asset. They can now manage, display, or transfer the NFT further based on their preferences.

Transferring NFTs provides a means for buying, selling, or gifting these unique digital assets. It enables collectors, artists, and users to trade NFTs in a peer-to-peer manner, removing the need for intermediaries and facilitating direct ownership transfers.

In summary, the transfer of an NFT involves the process of changing ownership and control of the digital asset from one wallet to another. It is facilitated by interacting with the NFT's smart contract and initiating a transfer transaction on the blockchain. The transfer allows for the secure and transparent exchange of NFTs, empowering individuals to buy, sell, or gift these unique digital assets. The transfer of the ownership of the NFT may be performed by a change of the wallet address in the NFT, especially the DN NFT. If the DN NFT is transferred to a new owner then for example the wallet address of the new owner is stored in the DN NFT.

### 1.2.5 W3NS TLD Smart Contract

The W3NS smart contract allows users to manage and trade domain NFT s (non-fungible tokens) on the W3NS platform. W3NS is an abbreviation for web3 same service. The smart contract includes functions such as creating and resolving domain names, creating subdomains, setting and retrieving IP address records (for example A and AAAA records), and transferring ownership of domain NFT s. The IP address records are not limited to the A or AAAA records, but all DNS record types can be used. In the following A and AAAA records are used only as examples.

Here are some features and functions provided by the W3NS smart contract:
- Constructor: Initializes the smart contract with the SVG XML and top-level domain parameters.
- Domain Creation: Users can mint domain NFT s by calling the "mintDomainNft" function and providing a domain name as a parameter. The function requires payment of a domain entry fee.
- Subdomain Creation: Users can create subdomains under their owned domains using the "createSubdomain" function. This function also requires payment of a domain entry fee.
- IP Address Records: The smart contract allows users to set and retrieve IP address records for domains and subdomains. The functions "setARecordForDomain," "setAAAARecordForDomain," "setARecordForSubdomain," and "setAAAARecordForSubdomain" are used to set IP address records, while the functions "getARecordForDomain," "getAAAARecordForDomain," "getARecordForSubdomain," and "getAAAARecordForSubdomain" retrieve the IP address records.
- Ownership and Transfer: Users can transfer ownership of domain NFT s by calling the "safeTransferFrom" function. The function requires the sender to be the current owner of the token (NFT or DN NFT) and the recipient to be a valid address within the blockchain for example a valid wallet address.
- Approval and Authorization: The smart contract provides functions for approval and authorization of operators. Users can approve another address to manage their domain NFT s using the "approve" function. The "setApprovalForAll" function is used to set the approval status for an operator.
- Domain Resolution: Users can resolve a domain name to retrieve its associated IP address by calling the "resolveDomain" function. When this function is called, the smart contract searches for a DN NFT with the domain name searched for. For example, a list of domain names and associated DN NFTs may be stored in the blockchain. In this way, a mapping is made between the domain name and the DN NFT that stores the IP address for the domain name. The Smart contract reads out the IP address of the DN NFT that also contains the domain name searched for and puts out the IP address to a computer 1 that searches for the IP address.
- Fee Management: The smart contract includes functions for managing fees. The "getDomainEntryFee" function retrieves the current domain entry fee, while the "setDomainEntryFee" function allows the contract owner to set the fee. The "getFeeRecipient" function retrieves the current recipient address for collected fees, and the "setFeeRecipient" function sets a new recipient address.
- Event Logging: The smart contract emits various events such as "CreateDomain," "CreateSubdomain," "DomainARecord," "DomainAAAARecord," and "Transfer" to notify listeners about domain creation, subdomain creation, IP address record updates, and token transfers.
- The word token refers to DN NFTs and NTFs.

### 1.2.6 Marketplace Smart Contract

The W3NS Marketplace is a smart contract that provides functionalities for buying and selling NFTs (Non-Fungible Tokens) on the blockchain. The contract defines a set of functions and events that can be interacted with using its ABI (Application Binary Interface). Here's a breakdown of the functions and events defined in the ABI:
Functions:
- buyltem: Allows a user to buy a listed NFT by providing the NFT address and token ID. This function is payable, meaning the buyer must send Ether along with the transaction to pay for the NFT.
- cancelListing: Allows the seller to cancel a listing for a specific NFT by providing the NFT address and token ID. This function can only be called by the seller and does not require any payment.
- checkRoyaltyForltemWithPrice: Retrieves the royalty information for an NFT with a given price. It takes the NFT address, token ID, and price as inputs and returns the royalty recipient address and the royalty amount.
- getListing: Retrieves the current listing information for a specific NFT. It takes the NFT address and token ID as inputs and returns the price and seller address of the listing.
- getProceeds: Retrieves the total proceeds (earnings) of the contract for a specific seller address.
- listltem: Allows the seller to list an NFT for sale by providing the NFT address, token ID, and price. This function creates a new listing for the NFT.
- owner: Retrieves the address of the contract owner (for example wallet address).
- renounceOwnership: Allows the current contract owner to renounce their ownership, giving up control of the contract.
- transferOwnership: Allows the current contract owner to transfer ownership to a new address (for example wallet address).
- updateListing: Allows the seller to update the price of an existing listing for a specific NFT by providing the NFT address, token ID, and the new price.
- withdrawProceeds: Allows the seller to withdraw their proceeds (earnings) from the contract.

The information provided by the Marketplace smart contract may be displayed on a display of the computer 1 for example.

Events:
1. ItemBought: Fired when an NFT is successfully purchased. It provides information about the buyer, NFT address, token ID, price, and royalty amount.
2. ItemCanceled: Fired when a listing is canceled by the seller. It provides information about the seller, NFT address, and token ID.
3. ItemListed: Fired when an NFT is successfully listed for sale. It provides information about the seller, NFT address, token ID, price, and royalty amount.
4. OwnershipTransferred: Fired when ownership of the contract is transferred from one address to another. It provides information about the previous owner and the new owner.

NFT refers to DN NFT.

Fired means that the respective information is stored in a block of the blockchain.

### 1.3 Frontend

In the decentralized domain name system W3NS, a frontend is a user interface that allows users to interact with the W3NS ecosystem. It serves as a gateway for users to access and manage decentralized domain names and top-level domains (TLDs).

The frontend provides users with a convenient way to search for available domain names, list their own domains for sale, and purchase domains from other users. It also enables users to register new TLDs, check domain name availability, transfer ownership of TLDs, renew TLD registrations, and manage associated metadata.

By utilizing the frontend, users can seamlessly navigate and engage with the W3NS marketplace and the W3NSTIdNft contract, which are the core components of the W3NS ecosystem. The frontend simplifies the process of buying and selling domain names, as well as managing TLDs, making it more accessible to users.

Overall, the frontend plays a role in facilitating user interaction with the decentralized domain name system, enabling users to participate in domain-related activities and contribute to the growth and development of the W3NS ecosystem.

### 1.4 Browser

In the context of the decentralized domain name system W3NS, a browser serves as a fundamental tool for users to access and interact with decentralized websites and applications.

When a user enters a domain name in the browser's address bar, the browser acts as a client and initiates a request to resolve the domain name into its corresponding decentralized address. In the case of W3NS, the browser interacts with the W3NS ecosystem to obtain the decentralized address associated with the entered domain name.

The browser then uses the decentralized address to establish a connection with the decentralized website or application hosted on a peer-to-peer network. It retrieves the website's content and renders it in a user-friendly format, allowing users to view and interact with the decentralized website or application.

Additionally, the browser plays a role in maintaining the security and privacy of users in the decentralized domain name system. It verifies the authenticity and integrity of the decentralized websites and applications by utilizing cryptographic mechanisms, such as digital signatures and secure connections (HTTPS).

Moreover, the browser may provide additional features and functionalities specific to the decentralized domain name system. For example, it may integrate with wallet software to enable seamless cryptocurrency transactions within decentralized applications, or it may support decentralized storage protocols to retrieve and store data from distributed networks.

Overall, the browser acts as a gateway for users to explore, access, and interact with decentralized websites and applications facilitated by the W3NS domain name system. It bridges the gap between users and the decentralized web, offering a familiar and intuitive interface for users to navigate and engage with decentralized content.

### 1.5 Resolver

In the W3NS system, a resolver plays a role in converting W3NS domain names into their corresponding IP addresses. It acts as an intermediary that facilitates the translation of human-readable domain names, such as "example.w3ns", into machine-readable IP addresses, such as "192.168.0.1" (IPv4) or "2001:0db8:85a3:0000:0000:8a2e:0370:7334" (IPv6).

When a user enters a W3NS domain name in their browser or application, the resolver is responsible for querying the W3NS system to retrieve the associated IP address information. The resolver communicates with the W3NS infrastructure, which stores and manages the mapping between W3NS domain names and their corresponding IP addresses.

To resolve a W3NS domain name, the resolver follows a series of steps:
1. Query: The resolver receives the W3NS domain name (e.g., "example.w3ns") as input.
2. W3NS Lookup: The resolver sends a request to the W3NS system for example the W3NS resolver, specifically the configured W3NS infrastructure, to retrieve the IP address information associated with the domain name.
3. Response: The W3NS system responds with the IP address information, including an IP address for example A records (IPv4 addresses) and AAAA records (IPv6 addresses) configured for the domain name.
4. Translation: The resolver extracts the relevant IP addresses from the response, translating the W3NS domain name into the corresponding IPv4 and IPv6 addresses.
5. Result: The resolver provides the resolved IP addresses (A and AAAA records) to the browser or application that initiated the query.
6. Connection: The browser or application can then establish a connection to the resolved IP address, allowing users to access the decentralized website or application associated with the W3NS domain name.

By performing these steps, the resolver enables seamless and transparent access to decentralized websites and applications by resolving W3NS domain names to their respective IP addresses. It acts as a bridge between the user's browser or application and the underlying W3NS infrastructure, ensuring that users can access decentralized content using familiar domain names while leveraging the power of the decentralized domain name system.

### 1.5.1 UserPC

In the context of resolving W3NS domains, the user's PC plays a role in the resolution process. To enable the resolution of W3NS domains, the user's PC needs to have a resolver integrated into its operating system or network settings. This integration allows the resolver to intercept DNS queries originating from the user's applications or web browsers.

When a user enters a W3NS domain name in their browser, their PC's resolver intercepts the DNS query before it reaches the default DNS resolver. The intercepted query is then redirected to the W3NS resolver, which is responsible for handling W3NS-specific domain name resolution.

The user's PC, acting as the intermediary, facilitates the communication between the application making the DNS query (e.g., the user's browser) and the W3NS resolver. It ensures that DNS queries for W3NS domains are routed to the appropriate resolver for W3NS resolution instead of being resolved through the traditional DNS system.

By configuring the resolver on the user's PC, the W3NS resolution process is seamlessly integrated into the user's existing network infrastructure. This integration enables the user's PC to participate in the resolution of W3NS domain names and facilitates the translation of W3NS domains into their corresponding IP addresses, allowing users to access decentralized websites and applications using familiar domain names.

The userPC may be a computer 1 or a mobile phone or a laptop that comprises a processor and a memory and that is able to perform the described functions.

### 1.5.2 Default DNS Resolver

In the context of the W3NS system, the role of the default DNS resolver configured in an operating system is to handle the resolution of traditional domain names that are not part of the W3NS domain system. This default resolver is responsible for translating domain names (e.g., example.com) into their corresponding IP addresses using the traditional Domain Name System (DNS). The default DNS resolver is optional and may be omitted.

By working together, the default DNS resolver and the W3NS resolver ensure that both traditional domain names and W3NS domain names can be resolved correctly, allowing users to access websites and applications from both centralized and decentralized systems seamlessly.

### 1.5.3 Local Resolver

In the context of DNS resolution, the "local resolver" plays a role in managing the configured resolvers system-wide. The local resolver is a component of the operating system or network configuration that determines which resolvers to use for DNS resolution and in what order. It simply forwards requests to all the configured resolvers.

The local resolver acts as an intermediary between applications making DNS queries and the actual resolvers responsible for resolving those queries. It receives DNS queries from applications and determines which resolver(s) to forward those queries to.

### 1.5.4 W3NS Resolver

The W3NS resolver plays a role in the W3NS system by specifically handling the resolution of W3NS domains. It is responsible for mapping W3NS domains to their corresponding A-records (IPv4 addresses) and AAAA-records (IPv6 addresses) configured in the W3NS registry. The W3NS resolver is designed to work in conjunction with the traditional DNS resolution process.

When a DNS query for a W3NS domain is sent to the local resolver, it also forwards the query to the W3NS resolver.

The W3NS resolver performs the following steps to resolve a W3NS domain:
1. Receive Query: The W3NS resolver receives the DNS query for a W3NS domain name from the local resolver. The query includes the domain name, such as "example.w3ns" or "mydomain.w3ns".
2. Check W3NS Smart Contract: The W3NS resolver checks the W3NS Smart Contract of the blockchain, which contains the mapping information for W3NS domain names. It looks up the requested domain name in the registry for example in alist to find the associated IP address for example A-record(s) and AAAA-record(s). The information is stored in an DN NFT in a block of the blockchain. The DN NFT comprises a domain name and the assigned IP address.
3. Return Records: If the W3NS smart contract finds a DN NFT for the searched domain name, then it reads out the IP address from the DN NFT and sends the IP address to the W3NS resolver. The W3NS resolver returns the IP address associated with the domain to the local resolver. (Currently prefers AAAA-records over ARecords)
4. Local Resolver Forwarding: The W3NS resolver sends the resolved IP addresses back to the local resolver, which then forwards them to the requesting application or client for example the UserPC or computer 1.
5. Optional iIntegration with Local Resolver: The W3NS resolver may work in conjunction with the local resolver to ensure that W3NS domain resolution is seamlessly integrated into the overall DNS resolution process. The local resolver acts as an intermediary, forwarding DNS queries to both traditional resolvers and the W3NS resolver based on the configured order.

The role of the W3NS resolver is to provide specialized resolution for W3NS domains, enabling decentralized domain name resolution within the W3NS system. It connects with the W3NS Smart Contract (Registry for example a list), retrieves the IP address information from the respective DN NFT associated with W3NS domain name, and returns the resolved IP address to the local resolver for further processing and delivery to the requesting application or client.

By integrating the W3NS resolver into the DNS resolution process, the W3NS system ensures that W3NS domains can be resolved accurately and efficiently, allowing users to access decentralized websites and resources associated with W3NS domains seamlessly.

The W3NS resolver may run on the computer 1 that is used by a user to search an IP address for a domain name or the W3NS resolver is run on an external computer that is connected with the computer 1 for example via an internet connection.

### 1.6 General

### 1.6.1 User

In the context of the figures, a User represents the entity resolving a domain name.

### 1.6.2 Buyer

In the context of the figures, a Buyer represents the entity buying a domain NFT.

### 1.6.3 Seller

In the context of the figures, a Seller represents the entity selling a domain NFT.

### 1.6.4 Deployer

In the context of the figures, a Deployer represents the entity creating the smart contract. Meaning the deployer represents the owner of the whole system.

### 1.6.5 ARecord

An A-record, or Address record, is a type of DNS record that maps a domain name to its corresponding IPv4 address. It is used to translate human-readable domain names, such as example.com, into machine-readable IP addresses, such as 192.0.2.1. A-records play a role in facilitating the routing of internet traffic to the correct destination server based on the domain name provided.

### 1.6.6 AAAARecord

An AAAA-record, or IPv6 Address record, is a type of DNS record that maps a domain name to its corresponding IPv6 address. It is similar to an A-record but specifically designed for IPv6 addresses, which are 128 bits long compared to the 32-bit IPv4 addresses. AAAA-records enable the translation of human-readable domain names into the longer IPv6 addresses, allowing devices and services to communicate over IPv6 networks. They are essential for supporting the growing adoption of IPv6 and ensuring seamless connectivity in the modern internet ecosystem.

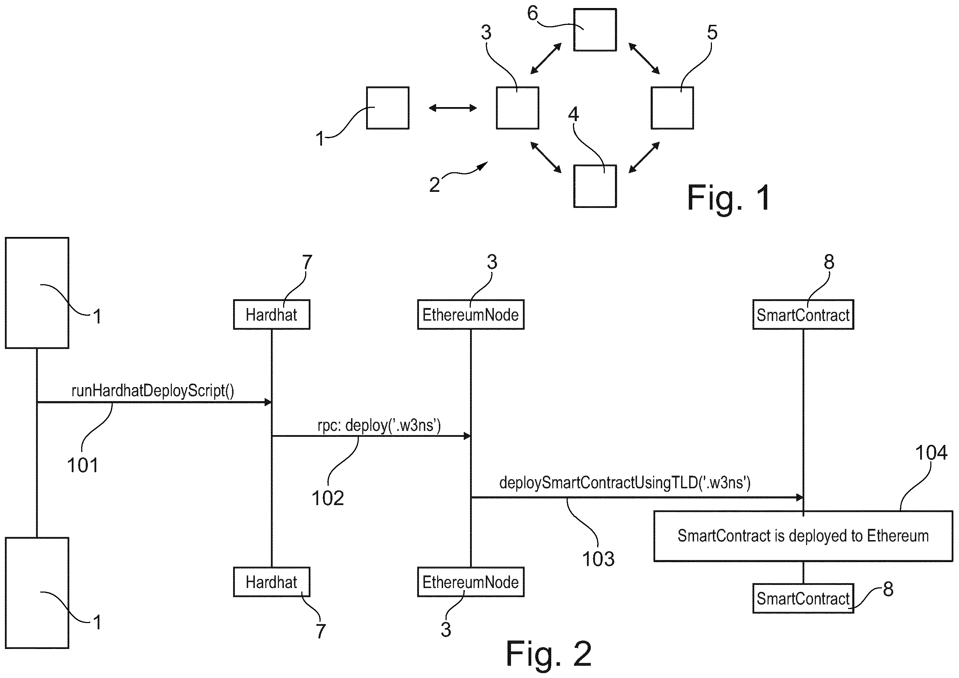

Fig. 1 depicts a schematic view of a blockchain network 2 that comprises several nodes or network computers 3,4,5,6. A computer 1 is arranged that is embodied to exchange data and/or control commands with a node of the blockchain network. The nodes or network computer 3-6 are embodied to operate a blockchain network for example the Ethereum blockchain. The computer 1 and the network computer 3 comprise interfaces that allow the communication between the computer 1 and the network computer 3. The computer 1 may be a personal computer, a laptop, a mobile phone or a virtual machine. The computer 1 is a User PC as explained before and may comprise a processor, a memory, a display, a keyboard or any kind of other human machine interface. The computer 1 may be connected via an internet connection with one or more computer of the network computer.

In figure 2, a sequence of events represents the deployment of a smart contract related to the w3ns system on the blockchain network 2 that operates an Ethereum blockchain using a software tool 7 called Hardhat. The figure involves three main participants: the deployer that uses the computer 1, the Hardhat software tool 7, and the network computer 3 of the blockchain network 2 that is in this case an Ethereum node. The Hardhat tool 7 runs on the computer 1.

The sequence begins with step 101 with the deployer instructing by using the computer 1 the Hardhat tool 7 to execute the "runHardhatDeployScript()" function. This "runHardhatDeployScript()" is responsible for deploying the w3ns-related smart contract on the blockchain of the blockchain network 2.

In the next step 102, the Hardhat tool 7 interacts with the network computer (EthereumNode) 3 through an RPC (Remote Procedure Call). The Hardhat tool 7 sends a request to the network computer 3, instructing it to deploy the first smart contract 8 using the top-level domain (TLD) '.w3ns'. The Network computer 3 processes at the next step 103 the request and deploys the first smart contract 8 specified by the TLD '.w3ns' . The first smart contract 8 is related to the w3ns system and is specifically designed to handle functionalities and operations within the decentralized domain name system. Finally, the first smart contract 8 is successfully deployed to the Ethereum network of the blockchain network 2 at step 103, and the figure indicates at step 104 that the deployment process is complete.

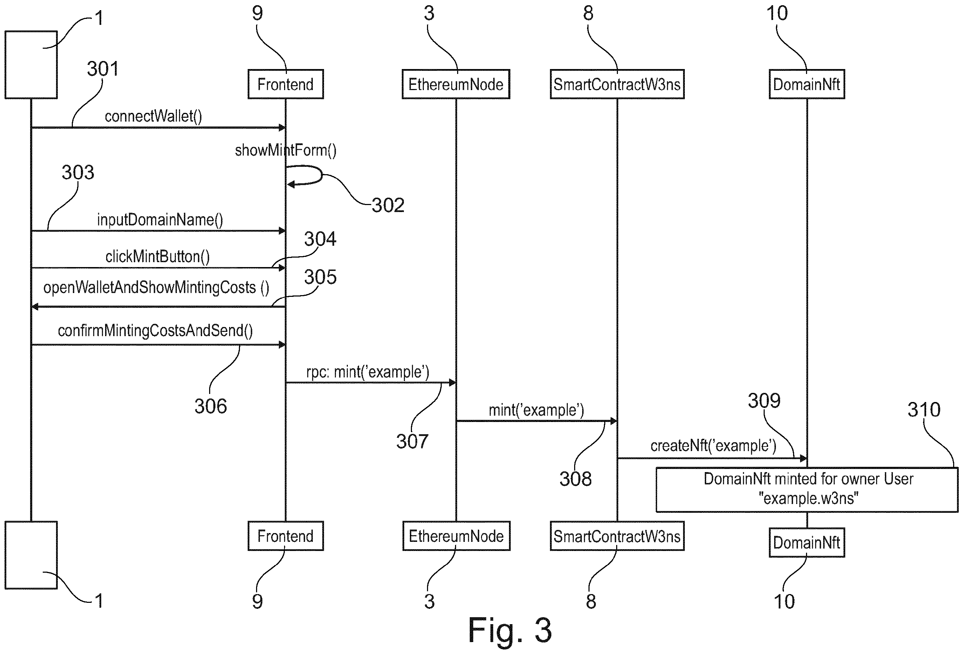

In figure 3, the sequence of events represents the process of minting a domain NFT within the w3ns system in the blockchain of the blockchain network 2. The figure involves several participants: a user with a computer 1, a frontend 9, the network computer 3, the first smart contract 8 (SmartContractW3NS), and a domain Nft smart contract 10. The frontend 9 is a software tool that runs on the computer 1. The sequence begins with the user interacting by the computer 1 with the frontend 9. The user connects at step 301 their wallet that runs on the computer 1 to the frontend 9 by executing the "connectWallet()" function. Then, the frontend 9 displays at step 302 a form on a display of the computer 1 to the user, allowing them to mint a domain name non-fungible token (NFT) 10.

The user provides at step 303 the desired domain name by inputting it into the displayed form and then clicks a "Mint" button of the display of the computer 1 at step 304 to initiate the minting process in the blockchain. The frontend 9 validates the input and retrieves the minting costs, which are then presented to the user through the wallet at step 305. The user confirms at step 306 the minting costs and proceeds to send the required funds by interacting with the frontend 9. The frontend 9 facilitates this process by handling the user's confirmation and sending the transaction request via an RPC (Remote Procedure Call) to the Network computer 3 at step 307. The Network computer 3 receives the minting request and forwards it at step 308 to the first smart contract 8 (SmartContractW3NS), which is the smart contract responsible for managing domain names within the w3ns system on the blockchain. The first smart contract 8 (SmartContractW3NS) processes the request and initiates the minting process for the specified domain name.

Finally, the first smart contract 8 interacts at step 309 with a domain Nft smart contract 10 to create a domain NFT (non-fungible token) 11 representing the minted domain name. The domain NFT is created with the specified domain name and is associated with a blockchain address of the wallet software of the user as the owner at step 310.

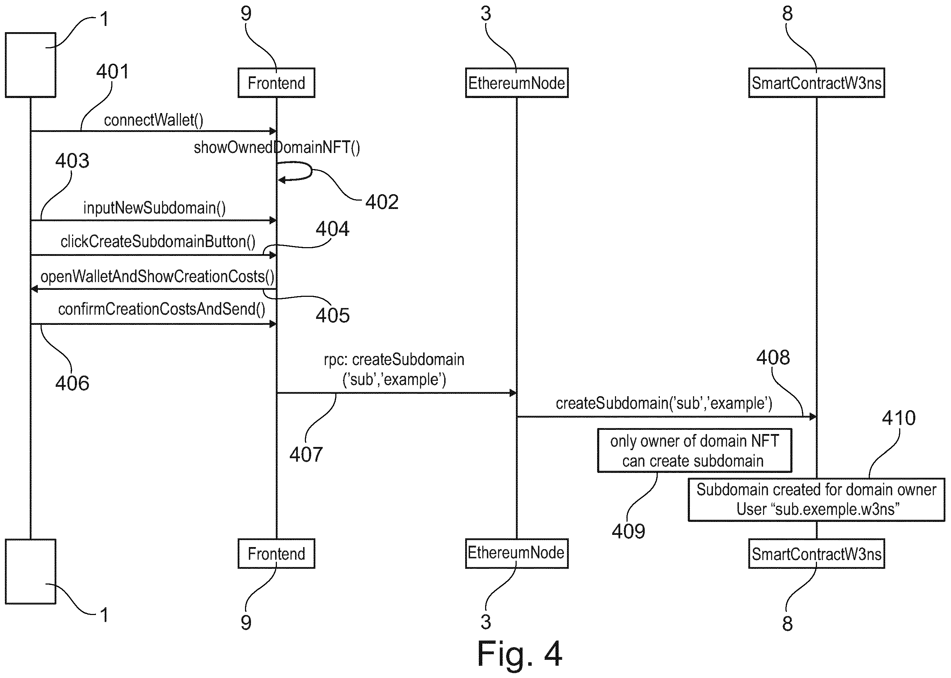

In figure 4, the sequence of events represents the process of creating a subdomain within the w3ns domain system of the blockchain. The figure involves several participants: the user with the computer 1, the frontend 9, the Network computer 3, and the first smart contract 8 (SmartContractW3NS).

The sequence begins at step 401 with the user using the computer 1 connecting their wallet program to the frontend 9 by executing the "connectWallet()" function. The frontend 9 then displays at step 402 the domain NFTs 11 owned by the wallet on a display of the computer 1.

The user provides at step 403 the desired subdomain name by inputting it into the frontend 9 and clicks at step 404 the "Create Subdomain" button on the display of the computer 1 to initiate the subdomain creation process. The frontend 9 validates the input and retrieves the creation costs, which are then presented to the user through the wallet at step 405. The user confirms the creation costs and proceeds to send the required funds by interacting with the frontend at step 406. The frontend 9 facilitates this process by handling the user's confirmation and sending the transaction request via an RPC (Remote Procedure Call) at step 407 to the Network computer 3. The network computer 3 receives the subdomain creation request and forwards it at step 408 to the first smart contract 8 (SmartContractW3NS), which is the smart contract responsible for managing domain names within the w3ns system of the blockchain. The first smart contract 8 processes the request and verifies that the user (wallet) is the owner of the domain NFT associated with the main domain at step 409. The first smart contract 8 may compare the wallet adress that is delivered with the request with the wallet address of the domain NFT of the main domain.

If the wallet of the user is the owner of the main domain NFT, then the first mart contract 8 creates at step 410 the subdomain with the specified name, appending it to the main domain. For example, if the User requested the subdomain "sub" for the domain "example.w3ns," the resulting subdomain would be "sub.example.w3ns." This subdomain is registered in the main domain NFT.

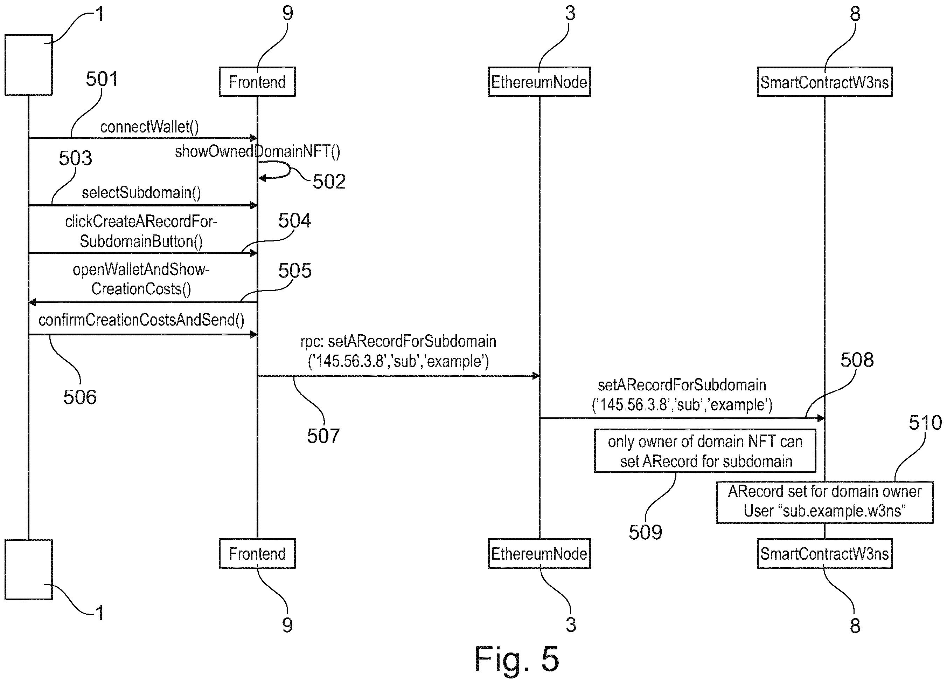

Figure 5 represents the process of setting an ARecord (IPv4 address) for a subdomain within the w3ns system. The actors involved in this sequence are the user with the computer 1, the frontend 9, the Network computer 3, and the first smart contract (SmartContractW3NS) 8.

The user begins at step 501 by connecting their wallet program that runs on the computer 1 to the frontend 9 using the "connectWallet()" function. The frontend 9 displays the NFTs owned by the wallet of the user on a display of the computer 1 at step 502.

The user selects and puts in the frontend 9 at step 503 the desired subdomain for which they want to set an ARecord. They then click at step 504 the "Create ARecord for Subdomain" button on the frontend 9 to initiate the ARecord creation process.

The frontend 9 presents the creation costs at step 505 to the user through their wallet on a displkay of the computer 1, and the user confirms the costs and proceeds with the transaction at step 506. This confirmation and transaction submission process is facilitated by the frontend 9.

The frontend 9 sends then at step 507 an RPC request to the network computer 3, specifically the "setARecordForSubdomain()" function, passing the IPv4 address (e.g., '145.56.3.8'), the subdomain name, and the main domain ('example') as parameters.

The network computer 3, upon receiving the request, forwards it at step 508 to the first smart contract 8. The First smart contract verifies at step 509 that the User is the owner of the domain NFT associated with the main domain. Only the owner of the domain NFT can set an ARecord for a subdomain.

If the User is the owner of the domain NFT, then the first smart contract 8 sets at step 510 the specified ARecord for the subdomain. This allows the subdomain to be associated with the provided IPv4 address.

The figure highlights the flow of actions from the User's connection to their wallet through the frontend, the request submission to the network computer, and the verification and ARecord setting performed by the first smart contract. It emphasizes that only the owner of the domain NFT can set an ARecord for a subdomain within the w3ns system.

### Figure 6

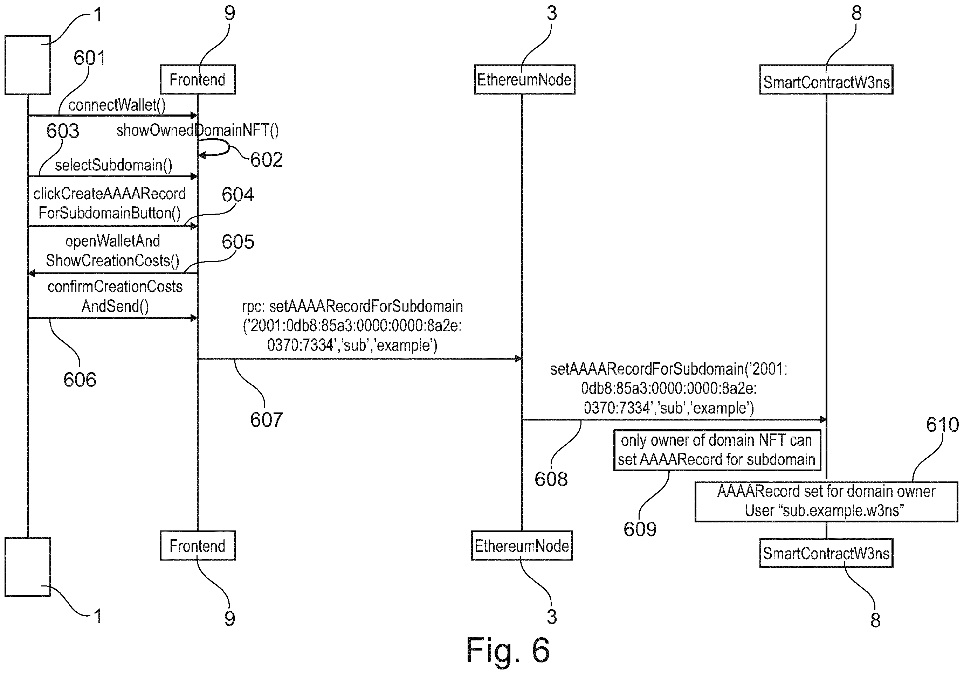

Figure 6 illustrates the process of setting an AAAARecord (IPv6 address) for a subdomain within the w3ns system. The actors involved in this sequence are the user using a computer, the frontend, the network computer, and the first smart contract.

The user starts at step 601 by connecting their wallet that runs on the computer 1 to the frontend using the "connectWallet()" function. The frontend 9 displays at step 602 the NFTs owned by the wallet of the user on a display of the computer 1.

The user then selects the desired subdomain for which they want to set an AAAARecord at step 603. They then click at step 604 the "Create AAAARecord for Subdomain" button on the frontend to initiate the AAAARecord creation process.

The frontend presents at step 605 the creation costs to the User through their wallet, and the user confirms with an input in the computer 1 the costs and proceeds with the transaction at step 606. This confirmation and transaction submission process is facilitated by the frontend.

The frontend sends at step 607 an RPC request to the network computer 3, specifically the "setAAAARecordForSubdomain()" function, passing the IPv6 address (e.g., '2001:0db8:85a3:0000:0000:8a2e:0370:7334'), the subdomain name, and the main domain ('example') as parameters.

The network computer 3 receives the request and forwards it at step 608 to the first smart contract 8. The first smart contract 8 verifies at step 609 that the wallet of the user is the owner of the domain NFT associated with the main domain. Only the owner of the domain NFT can set an AAAARecord for a subdomain.

If the user is the owner of the domain NFT, then at step 610 the first smart contract 8 sets the specified AAAARecord for the subdomain. This associates the subdomain with the provided IPv6 address.

The figure showcases the User's connection to their wallet through the frontend, the submission of the request to the network computer, and the verification and AAAARecord setting performed by the first smart contract. It emphasizes that only the owner of the domain NFT can set an AAAARecord for a subdomain within the w3ns system.

### Figure 7

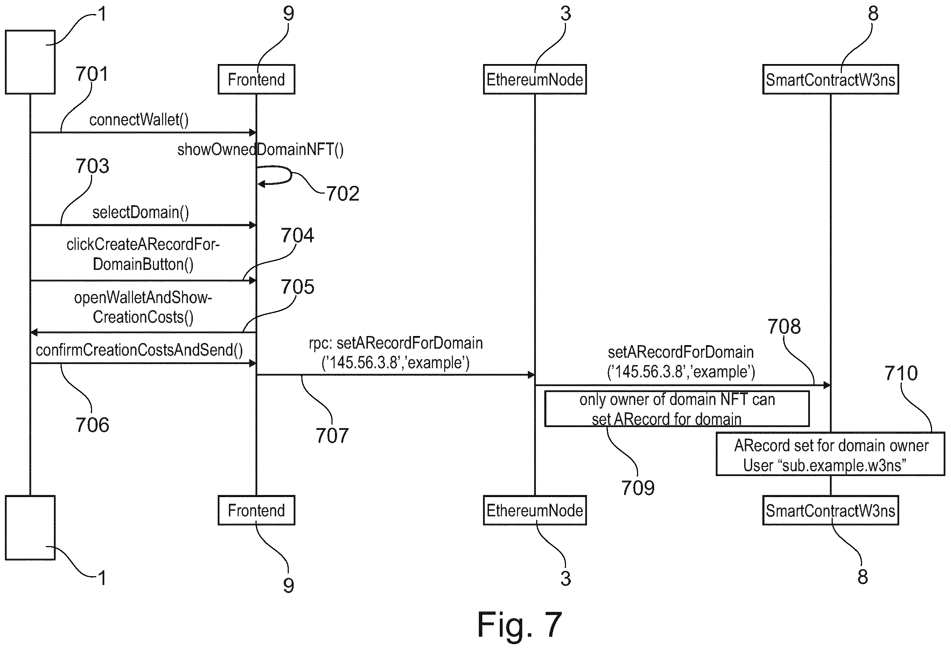

Figure 7 depicts the process of setting an ARecord (IPv4 address) for a domain within the w3ns system. The actors involved in this sequence are the user using a computer 1, the Frontend, the network computer 3, and the first smart contract 8.

The user initiates the process by connecting at step 701 their wallet that runs on the computer 1 to the frontend 9 using the "connectWallet()" function. The frontend 9 then displays the NFTs owned by the wallet of the user on a display of the computer 1.

The user selects the desired domain for which they want to set an ARecord at step 703 by inputting the desired domain in the computer 1. Then they click at step 704 the "Create ARecord for Domain" button on the frontend 9 to begin the ARecord creation process.

The frontend 9 presents at step 705 the creation costs to the user through their wallet. The user confirms the costs and proceeds with the transaction at step 706 by an input in the computer 1, indicating their intention to set an ARecord for the domain.

The frontend the sends at step 707 an RPC request to the network computer 3, specifically the "setARecordForDomain()" function, providing the IPv4 address (e.g., '145.56.3.8') and the domain name ('example') as parameters.

The network computer 3 receives the request and forwards it at step 708 to the first smart contract. The first smart contract verifies that the wallet of the user is the owner of the domain NFT associated with the domain at step 709. Only the owner of the domain NFT can set an ARecord for a domain.

If the User is the owner of the domain NFT, then the first smart contract 8 sets at step 710 the specified ARecord for the domain. This associates the domain with the provided IPv4 address.

The figure highlights the User's connection to their wallet through the Frontend, the submission of the request to the network computer 3, and the verification and ARecord setting performed by the first smart contract. It emphasizes that only the owner of the domain NFT can set an ARecord for a domain within the w3ns system.

### Figure 8

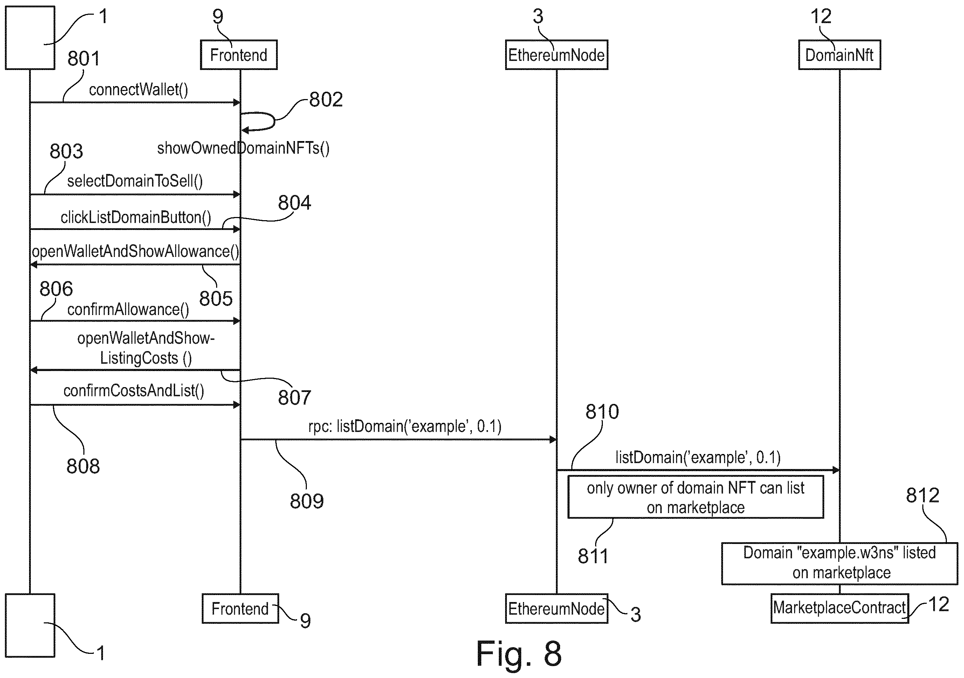

Figure 8 illustrates the process of listing a domain for sale on a marketplace within the w3ns system. The actors involved in this sequence are a seller, the frontend, the network computer 3, and a second smart contract, the MarketplaceContract.

The seller begins at step 801 by connecting their wallet that runs on the computer 1 to the frontend 9 using the "connectWallet()" function. The frontend 9 displays at step 802 the domain NFTs owned by the wallet of the seller on a display of the computer 1.

The seller selects at step 803 the domain they want to sell by an input in the computer 1 and clicks at step 804 the "List Domain" button on the frontend 9.

The frontend 9 prompts at step 805 the seller to allow the marketplace to transfer the domain NFT by showing the required allowance on the display of the computer 1. This step ensures that the marketplace can handle the transfer of the domain NFT on behalf of the seller. The seller confirms the allowance at step 806.

Next, the frontend presents at step 807 the listing costs to the seller through their wallet on a display of the computer 1. The seller confirms the costs at step 808 and proceeds to list the domain for sale.

The frontend sends then at step 809 an RPC request to the network computer 3, specifically the "listDomain()" function, providing the domain name ("example") and the desired price for example in ETH (0.1) as parameters.

The network computer 3 forwards at step 810 the request to the second smart contract 12 (MarketplaceContract), which verifies at step 811 that the wallet of the seller is the owner of the domain NFT associated with the domain. Only the owner of the domain NFT can list it on the marketplace.

If the wallet of the seller is the owner of the domain NFT, the second smart contract 12 lists the domain "example.w3ns" on the marketplace at step 812, indicating that it is available for sale.

The figure emphasizes the seller's connection to their wallet through the frontend, the steps to allow the marketplace to transfer the domain NFT, the confirmation of listing costs, and the execution of the listing transaction through the Network computer 3 and the second smart contract. It highlights that only the owner of the domain NFT can list it for sale on the marketplace within the w3ns system.

### Figure 9

Figure 7 illustrates the process of a buyer purchasing a domain from a marketplace within the w3ns system. The actors involved in this sequence are the buyer, the frontend, the network computer 3, the second smart contract (MarketplaceContract), and the first smart contract.

The buyer begins by connecting their wallet that runs on the computer 1 to the frontend 9 at step 901 using the "connectWallet()" function. The frontend 9 displays at step 902 the NFTs listed on the second smart contract 12 (marketplace).

The buyer selects the domain they wish to purchase at step 903 by an input in the computer 1 and clicks the "Buy Domain" button on the frontend 9 at step 904.

The frontend presents the costs associated with the purchase to the buyer at step 905 through their wallet on a display of the computer 1. The buyer confirms the costs and proceeds with the purchase by an input in the computer 1 at step 906.

The frontend 9 sends at step 907 an RPC request to the Network computer 3, specifically the "buyDomain()" function, providing the domain name ("example") as a parameter.

The network computer 3 forwards at step 908 the request to the second smart contract 12 (MarketplaceContract), which handles the purchase transaction. The second smart contract 12 confirms that the domain "example.w3ns" is available for purchase.

Upon successful verification of the purchase of the domain at step 910, the second smart contract 12 initiates at step 911 a transfer of the domain NFT from the wallet of the seller to the wallet of the buyer using the "transferFrom()" function. This transfer is facilitated at step 912 by the first smart contract 8, which manages ownership and transfers of domain NFTs.

After the transfer, the buyer becomes at step 913 the new owner of the domain NFT associated with "example.w3ns". The figure emphasizes the buyer's connection to their wallet through the frontend 9, the confirmation of costs, and the execution of the purchase transaction through the network computer 3, the second smart contract, and first smart contract. It highlights that the domain NFT ownership is transferred from the seller to the buyer via the first smart contract, ensuring a secure and reliable domain purchase process within the w3ns system.

### Figure 10

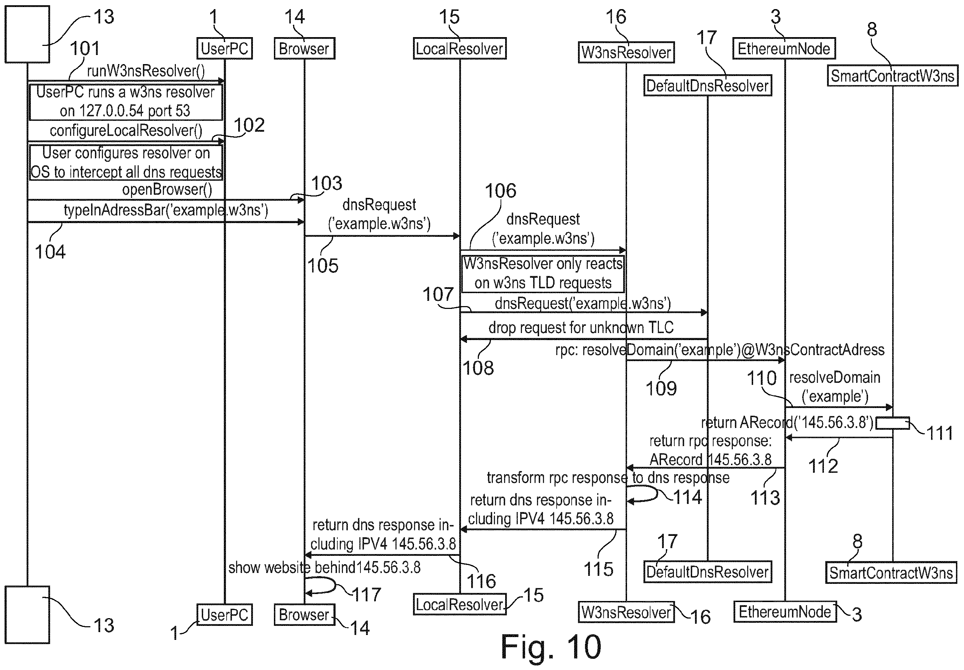

Figure 10 depicts the process of resolving a w3ns domain name (e.g., "example.w3ns") within a decentralized domain name system in a blockchain. The actors involved in this sequence are for example the user, computer 1, browser, local resolver, w3ns resolver, default DNS resolver, network computer 3, first smart contract.

The user 13 initiates the process by running the w3ns resolver 16 on their computer 1 at step 101, specifically on localhost IP address 127.0.0.54 and port 53. The user 13 then configures at step 102 their local resolver 15 on the operating system to intercept all domain name system (DNS) requests.

Next, the user opens the browser 14 at step 103 and types at step 104 in the address bar the w3ns domain name they wish to access, in this case, "example.w3ns".

The browser sends at step 105 a DNS request for "example.w3ns" to the local resolver 15.

The local resolver 15, being configured as the default resolver for the operating system, receives the DNS request. It first checks if the TLD (Top-Level Domain) is ".w3ns". If it is not, the local resolver 15 forwards at step 107 the request to the default DNS resolver 17. The default DNS resolver 17 drops at step 108 the request since the default DNS resolver does not know the searched domain name "example.w3ns".

However, since the TLD in this case is ".w3ns", the local resolver recognizes it as a w3ns domain and forwards the request to the w3ns resolver 16 at step 106.

The w3ns resolver 16, specialized in resolving w3ns domains, receives the DNS request for "example.w3ns". It then sends at step 109 an RPC (Remote Procedure Call) request to the network computer 3. The network computer 3 sends at step 110 a command to the first smart contract 8 to resolve the domain "example" using the resolveDomain() function.

The first smart contract 8 processes the request (resolve Domain() function) and retrieves the ARecord associated with "example.w3ns" from its storage at step 111. In this case, the ARecord is the IPV4 address "145.56.3.8".

The first smart contract returns at step 112 the ARecord to the network computer 3, which in turn sends the response back to the w3ns resolver at step 113.

The w3ns resolver transforms the RPC response into a DNS response at step 114 and includes the ARecord for "example.w3ns".

The w3ns resolver returns the DNS response at step 115, containing the ARecord "145.56.3.8", to the local resolver 15.

The local resolver 15, upon receiving the DNS response, forwards it back to the browser at step 116.

Finally, the browser receives the DNS response containing the IPV4 address "145.56.3.8" and proceeds to show the website associated with that address at step 117 on the display of the computer 1.

Overall, this figure shows the interaction between the user, the computer of the user, browser, local resolver, w3ns resolver, default Dns resolver, network computer 3, and first smart contract to resolve a w3ns domain name and retrieve the corresponding IPV4 address for accessing the website. The same process works with an IPV6 address or other address systems for example IPV6 addresses.

Depending on the used embodiment, the default DNS resolver 17 may be omitted if for example only domain names are used that are stored in the blockchain.

In a further embodiment, the computer 1 does not run a W3NS resolver but the W3NS resolver is run on an external computer.

The user 13 initiates the process by configuring on the computer their local resolver 15 on the operating system to intercept all domain name system (DNS) requests. The local resolver 15 uses in this case an external W3NS resolver that runs on an external computer for searching an IP address for a domain name. The computer 1 and the external computer may be connected via internet. Next, the user opens the browser 14 and types in the address bar the w3ns domain name they wish to access, in this case, "example.w3ns". The browser sends at step 105 a DNS request for "example.w3ns" to the local resolver 15 or directly to the external W3NS resolver 16.

The local resolver 15, being configured as the default resolver for the operating system, receives the DNS request. It first checks if the TLD (Top-Level Domain) is ".w3ns". If it is not, the local resolver 15 forwards the request to the default DNS resolver 17. The default DNS resolver 17 drops the request since the default DNS resolver does not know the searched domain name "example.w3ns". However, since the TLD in this case is ".w3ns", the local resolver recognizes it as a w3ns domain and forwards the request to the external w3ns resolver 16.

The w3ns resolver 16, specialized in resolving w3ns domains, receives the DNS request for "example.w3ns". It then sends an RPC (Remote Procedure Call) request to the network computer 3. The network computer 3 sends a command to the first smart contract 8 to resolve the domain "example" using the resolveDomain() function.

The first smart contract 8 processes the request (resolveDomain() function) and retrieves the IP address associated with "example.w3ns" from its storage. In this case, the IP address is the IPV4 address "145.56.3.8".

The first smart contract returns the IP address for example ARecord to the network computer 3, which in turn sends the response back to the w3ns resolver.

The w3ns resolver transforms the RPC response into a DNS response and includes the IP address for "example.w3ns".

The w3ns resolver returns the DNS response, containing the IP address "145.56.3.8", to the local resolver 15 or to the browser directly.

The local resolver 15, upon receiving the DNS response, forwards it back to the browser.

Finally, the browser receives the DNS response containing the IP address (IPV4 address "145.56.3.8") and proceeds to show the website associated with that address on the display of the computer 1.

Some of the discussed methods refer to IPv4 or IPv6 addresses. However, the methods are not limited to these type of addresses. These IPv4 or IPv6 are only used as examples.

There are a multitude of decentralized dns protocols out there already. So far they usually only resolve the configured domain names against wallet addresses or IPFS (interplanetary file system) content. Some also provide a centralized resolver (which needs to be set in the browser's configuration). This seems to be a working solution, but under the hood it is very centralized, since all the requests are done via this one public resolver.

In the case of W3NS, the resolver actually resolves normal DNS entries (for example IPV4 or IPV6). For that to work, a user wanting to use the W3NS protocol may to configure and run an actual program on his machine. On the one hand, this means configuration effort, but on the other hand, it makes sure that there is no centralized entity that can restrict you from using the system, which makes it very censorship resistant.

Certain embodiments can be performed using a computer program or set of programs. The computer programs can exist in a variety of forms both active and inactive. For example, the computer programs can exist as software program(s) comprised of program instructions in source code, object code, executable code or other formats; firmware program(s), or hardware description language (HDL) files.

Any of the above can be embodied on a transitory or non-transitory computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), and magnetic or optical disks or tapes.

While the invention has been described with reference to the exemplary embodiments thereof, those skilled in the art will be able to make various modifications to the described embodiments without departing from the true spirit and scope. The terms and descriptions used herein are set forth by way of illustration only and are not meant as limitations. In particular, although the method has been described by examples, the steps of the method can be performed in a different order than illustrated or simultaneously. Those skilled in the art will recognize that these and other variations are possible within the spirit and scope as defined in the following claims and their equivalents.

## Claims

1. A computer-implemented method for operating a domain name system by using a blockchain, wherein the blockchain comprises a smart contract, wherein the smart contract handles at least one domain non-fungible-token (DN NFT), wherein the DN NFT comprises a domain name and an IP address that is assigned to the domain name, wherein the smart contract searches after receiving a request with a domain name to resolve an IP address for the domain name by using the domain name the DN NFT that comprises the domain name and the IP address, wherein the smart contract outputs the IP address that is assigned to the domain name in the DN NFT.

2. Method of claim 1, wherein a domain list that assigns domain names to DN NFTs is stored in the blockchain, wherein each DN NFT comprises a domain name and the corresponding IP address, wherein the smart contract is embodied to access the list, do search a searched domain name in the list, to access the DN NFT that is assigned to the searched domain name of the list, to output the IP address that is stored in the DN NFT as IP address of the searched domain name.

3. Method of any one of the preceding claims, wherein the smart contract is embodied to receive a request to mint a DN NFT for a domain name and an IP address, wherein the smart contract is embodied to mint a DN NFT in the blockchain that comprises the domain name and the IP address.

4. Method of claim 3, wherein the smart contract lists the minted DN NFT in a domain list with the domain name and the address of the DN NFT.

5. Method of any one of the preceding claims, wherein the DN NFT comprises an address of a wallet, wherein the smart contract is embodied to change data of the DN NFT upon a request from the wallet with the address that is stored in the DN NFT.

6. Method of any one of the preceding claims, wherein the smart contract is embodied to provide upon a request at least one DN NFT that can be bought and transferred to another wallet, and wherein especially the smart contract changes the address of the wallet in the DN NFT after a predetermined amount of token is transferred to a predetermined wallet.

7. The method of any one of the preceding claims, wherein the smart contract is embodied to mint a DN NFT for a top level domain with a predetermined IP address and/or wherein the smart contract is embodied to mint a DN NFT for a subdomain of a top level domain.

8. A blochchain for operating a domain name system, wherein the blockchain comprises a smart contract, wherein the smart contract handles at least one domain non-fungible-token (DN NFT), wherein the DN NFT comprises a domain name and an IP address that is assigned to the domain name, wherein a request with a domain name is received by the blockchain to resolve for the domain name a corresponding IP address of the domain name, wherein the smart contract of the blockchain searches by using the domain name the DN NFT in the blockchain that is assigned to the domain name, wherein the smart contract reads out the IP address of the DN NFT, wherein the blockchain puts out as a response to the request at least the IP address that is assigned to the domain name in the DN NFT of the blockchain.

9. The blockchain of claim 8, wherein a request to mint for a domain name and for an IP address a domain non-fungible-token (DN NFT) is received by the blockchain, wherein a smart contract of the blockchain mints the DN NFT that comprises the domain name and the IP address in the blockchain.

10. The blockchain of claim 9, wherein the smart contract lists the minted DN NFT in a domain list with the domain name and a blockchain address of the DN NFT.

11. A computer-implemented method for operating a domain name system, wherein a request with a domain name is sent to a blockchain with the request to search a domain non-fungible-token (DN NFT) that comprises the domain name and the IP address in the blockchain and to put out the IP address of the DN NFT.

12. The method of claim 11, wherein the request with the domain name is sent to the blockchain via port 53 of an UDP protocol or TCP protocol.

13. The method of claim 11 or 12, wherein the request with the domain name is checked before sending the request to the blockchain, wherein the request is checked whether it comprises a domain name that is stored in the blockchain or outside the blockchain, wherein the request is sent to the blockchain if the request comprises a domain name that is stored in the blockchain, and wherein the request is sent to a domain name system outside the blockchain if the request comprises a domain name that is stored outside the blockchain.

14. A computer that is embodied to perform a method according to any one of the claims 1 to 7 or 11 to 13.

15. A computer program comprising instructions which, when the program is executed by a computer, cause the computer to perform the method of any one of the claims 1 to 7 or 11 to 13.
